# EUROPEAN PATENT APPLICATION

(11) **EP 4 530 289 A1**
(43) Date of publication of application: **02.04.2025**
(21) Application number: 22959032.8
(22) Date of filing: 20.09.2022
(51) Int. Cl.: C07F 9/30

(54) **DIALKYL PHOSPHINIC ACID HYBRID SALT, PREPARATION METHOD THEREFOR, AND USE THEREOF**

(71) Applicant: Ningbo Institute of Materials Technology & Engineering, Chinese Academy of Sciences, Ningbo, Zhejiang 315201 (CN)
(72) Inventor: YAO, Qiang, Ningbo, Zhejiang 315201 (CN); ZHAO, Yueying, Ningbo, Zhejiang 315201 (CN); CAO, Weihong, Ningbo, Zhejiang 315201 (CN); TANG, Tianbo, Ningbo, Zhejiang 315201 (CN)
(74) Representative: Huang, Liwei
(86) International application number: PCT/CN2022/119947
(87) International publication number: WO 2024/060020

(57) **Abstract**

Disclosed is a hybrid dialkylphosphinic acid salt, a preparation method therefor and use thereof. The hybrid dialkylphosphinic acid salt is selected from the group consisting of compounds of formula (I) and combinations thereof. The hybrid dialkylphosphinic acid salt having composition of formula (I) provided in the present disclosure features small addition amount, high flame-retardant efficiency for various polymer materials and good thermal stability. The hybrid dialkylphosphinic acid salt overcomes the disadvantage of low flame-retardant efficiency of diethylphosphinate for polymer materials as well as the poor thermal stability and more smoke of long-chain dialkylphosphinic acid salt in combustion. The hybrid dialkylphosphinic acid salt can be widely applied to flame-retard polymer materials which require high-temperature processing.

## Description

### Technical Field

The present disclosure relates to a hybrid dialkylphosphinic acid salt, a preparation method therefor and use thereof and belongs to the field of preparation of flame-retardant polymer materials.

### Background

Dialkylphosphinic acid salts (Dialkylphosphinates), especially aluminum diethylphosphinate, have been widely used as halogen-free flame retardants for polymer materials. However, existing dialkylphosphinic acid salts in glass-fiber-reinforced polymer materials have limited flame-retardant efficiency and often need to be used together with synergists. Patents US6207736, US6255371, US6547992, etc., report diethylphosphinates and ammonium polyphosphate, melamine polyphosphates, and/or inorganic compounds such as zinc stannate-synergized flame-retardant glass-fiber-reinforced polyamides and polyesters. However, the consumption of flame retardants is large, the thermal stability of ammonium polyphosphate is not high, and melamine polyphosphate easily migrates.

Patent US7420007 reports aluminum diethylphosphinate containing 6% or less of telomeric phosphinates, i.e., long-chain dialkylphosphinic acid salts. Patent CN104072537B reports a process of removing long-chain dialkylphosphinic acid salts in a process of preparing diethylphosphinates. These patents emphasize the avoidance of the production and use of high-content long-chain dialkylphosphinic acid salts with poor thermal stability. In practice, it is found that long-chain dialkylphosphinic acid salts, such as aluminum dibutylphosphinate, produce lot of smoke when used in flame-retardant glass-fiber-reinforced polyamide, which is not favorable for safe escape. Flame retardants with effective flame retardancy and low smoke when burning have always been desired in the industry.

Now, surprisingly, the hybrid salt composed of a high content of long-chain dialkylphosphinate ion and diethylphosphinate ion has high thermal stability and very high flame-retardant efficiency and can be used alone to achieve flame retardancy of polymer materials without the help of synergistic agents, and the flame-retardant materials therefrom produce less smoke when burning.

### Summary

In order to solve the above technical problems, the present disclosure provides a hybrid dialkylphosphinic acid salt, a preparation method therefor and use thereof. The hybrid dialkylphosphinic acid salt is a hybrid dialkylphosphinic acid salt having composition of formula (I). The hybrid dialkylphosphinic acid salt features high thermal stability, small addition amount, high flame-retardant efficiency for various polymer materials and low smoke, can meet the requirement of engineering plastics for high-temperature processing and has high cost-effectiveness.

According to a first aspect of the present disclosure, provided is a hybrid dialkylphosphinic acid salt selected from the group consisting of compounds of formula (I) and combinations thereof; 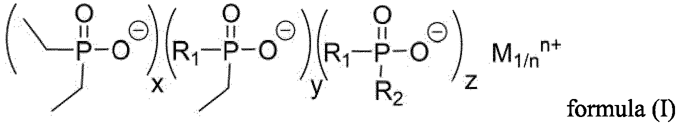
wherein M is a central atom; R₁ and R₂ are each independently selected from C₄-C₁₂-alkyl, and at least one of R₁ and R₂ is not isobutyl;
diethylphosphinate ion, ethyl-R₁-phosphinate ion and R₁-R₂-phosphinate ion are all ligands;
M is selected from metal elements; the metal element is selected from the group consisting of group IIA, IIIA, IVA, VA metal elements, a transition metal element, a lanthanide metal element and combinations thereof;
n is the valence state of the metal element M; n is 2,3 or 4;
at least two of ethyl-R1-phosphinate ion, diethylphosphinate ion, and R₁-R₂-phosphinate ion are paired with the same central atom M; one of the ligands paired with the central atom M must be the ethyl-R1-phosphinate ion;
0≤X≤0.76; 0.05≤y≤0.76; 0≤z≤0.76, and x+y+z=1.

In embodiments of the present disclosure, R₁ and R₂ are each independently selected from C₄-C₁₂-alkyl and are identical or different, and at least one of R₁ and R₂ is not isobutyl. The C₄-C₁₂-alkyl may be linear or branched alkyl, including but not limited to, n-butyl, isobutyl, sec-butyl, tert-butyl, n-amyl, isoamyl, neopentyl, sec-amyl, tert-amyl, n-hexyl, isohexyl, sec-hexyl, tert-hexyl, n-heptyl, isoheptyl, sec-heptyl, tert-heptyl, n-octyl, isooctyl, sec-octyl, tert-octyl, n-nonyl, sec-nonyl, tert-nonyl, n-malvyl, isomalvyl, sec-sunflower, tert-malvyl, n-undecyl, isoundecyl, sec-undecyl, tert-undecyl, N-dodecyl, iso-dodecyl, sec-dodecyl, and tert-dodecyl.

In the present disclosure, when R₁ or R₂ comprises a mixture of isomers, substances that are isomers of each other are regarded as one substance for the purpose of calculating the value of y. For example, R₁ is butyl, including n-butyl, isobutyl, sec-butyl, and tert-butyl. In calculation of y in formula (I), the ethyl butylphosphinate ions (R₁= butyl in formula (1)) include ethyl n-butylphosphinate ion, ethyl isobutylphosphinate ion, ethyl sec-butylphosphinate ion, and ethyl tert-butylphosphinate ion. y is a ratio of the total number of moles of these four ethyl butylphosphinate ions to the total number of moles of all dialkylphosphinate ions (i.e., the sum of the number of moles of diethylphosphinate ion, the number of moles of ethyl butylphosphinate ion and the number of moles of R₁-R₂-phosphinate ion). In calculation of z in formula (I), if R₁ and R₂ both have isomers, the substances that are isomers of each other are regarded as one substance in the same way as described above. In the embodiment of the present disclosure, if x is greater than 0.76 in formula (I), the flame retardant performance is poor. If z is greater than 0.76, the thermal stability decreases, which is unfavorable to the preparation and physical properties of flame-retardant polymer materials. If y is greater than 0.76, the preparation cost is high and the cost-effectiveness is poor.

Optionally, the lower limit of x is independently selected from 0, 0.01, 0.03, 0.05, 0.10, 0.15, 0.20, 0.25 and 0.30; the upper limit is independently selected from 0.76, 0.70, 0.67, 0.65, 0.60, 0.55, 0.50, 0.45, 0.40 and 0.35.

Optionally, the lower limit of y is independently selected from 0.05, 0.10, 0.15, 0.20, 0.25, 0.30, 0.35 and 0.40; the upper limit is independently selected from 0.76, 0.70, 0.67, 0.65, 0.60, 0.55, 0.50 and 0.45.

Optionally, the lower limit of z is independently selected from 0, 0.001, 0.005, 0.01, 0.02, 0.03, 0.05 and 0.08; the upper limit is independently selected from 0.76, 0.70, 0.67, 0.65, 0.60, 0.55, 0.50, 0.45, 0.40, 0.35, 0.30, 0.25, 0.20, 0.15 and 0.10.

Optionally, the group IIA metal element is selected from the group consisting of Be, Mg, Ca, Sr, Ba and combinations thereof;
the group IIIA metal element is Al;
the group IV A metal element is Sn;
The group VA metal element is Sb;
the transition metal element is selected from the group consisting of Fe, Zn, Cu, Ti, Zr, Mn and combinations thereof;
the lanthanide metal element is Ce.

Optionally, the metal element is selected from the group consisting of Al, Zn, Ca, Fe and combinations thereof.
Optionally, the metal element is Al, and n=3.
Optionally, 0≤x≤0.76; 0.05≤y≤0.67; 0.005≤z≤0.76.
Optionally, 0≤x≤0.70; 0.05≤y≤0.67; 0.005≤z≤0.70.
Optionally, 0.1≤x≤0.65; 0.30≤y≤0.67; 0.01≤z≤0.50.
Optionally, 0.30≤x≤0.65; 0.30≤y≤0.65; 0.02≤z≤0.40.

In an embodiment of the present disclosure, the greater the value of z, the earlier the thermal weight loss of the hybrid dialkylphosphinic acid salt.

The hybrid dialkylphosphinic acid salts in the present disclosure are not simple physical mixtures of different dialkylphosphinic acid salts. For example, when R₁ and R₂ are butyl, the hybrid dialkylphosphinic acid salts are not simple mixtures of aluminum diethylphosphinate, aluminum ethyl-butylphosphinate and aluminum dibutylphosphinate, but hybrid salts composed of at least two of diethylphosphinate ion, ethyl-butylphosphinate ion and dibutylphosphinate ion coordinated with the same aluminum atom, and one ligand in the hybrid salts is ethyl-butylphosphinate ion. The X-ray diffraction (XRD) patterns of these hybrid salts are very different from the XRD patterns of simple physical mixtures of dialkylphosphinates. The hybrid dialkylphosphinic acid salts of formula (I) show single peaks in strongest absorption peak regions in the XRD patterns. However, the physical mixtures obtained by simply mixing aluminum diethylphosphinate and aluminum dibutylphosphinate show two completely independent peaks in the XRD patterns, and their d values are close to the respective d values of aluminum diethylphosphinate and aluminum dibutylphosphinate.

In embodiments of the present disclosure, when hybrid dialkylphosphinic acid salts having composition of formula (I) are simply mixed with aluminum diethylphosphinate or aluminum dibutylphosphinate in a physical manner, two independent peaks also appear in the strongest absorption peak regions in their XRD patterns. These results obviously indicate that the hybrid dialkylphosphinic acid salts having composition of formula (I) in the present invention are not simple mixtures of aluminum diethylphosphinate, aluminum ethyl-R₁-phosphinate and aluminum R₁-R₂-phosphinate, but structures consisting of at least two of diethylphosphinate ion, ethyl-R₁-phosphinate ion and R₁-R₂ phosphinate ion paired with the same aluminum atom, and one ligand in the hybrid dialkylphosphinic acid salts is ethyl-R₁-phosphinate ion.

In embodiments of the present disclosure, at the same use amount, pure long-chain aluminum dialkylphosphinate (R₁ and R₂ are C₄-C₁₂-alkyl) has poor thermal stability, which cannot satisfy requirements of polymer materials for high-temperature processing. The flame-retardant efficiency is not high, and in practice, it is found that the long-chain aluminum dialkylphosphinate-based flame-retardant polymer produces more smoke than the aluminum diethylphosphinate-based flame-retardant system. However, the pure aluminum diethylphosphinate has low flame-retardant efficiency when used alone, and it is difficult to promote the polymer material to obtain good flame retardant effect when the pure aluminum diethylphosphinate is used alone. In contrast, the hybrid dialkylphosphinic acid salt having composition of formula (I) has higher thermal stability than long-chain aluminum dialkylphosphinate, lower smoke, and better flame retardant effect than pure aluminum diethylphosphinate and pure aluminum dialkylphosphinate, which is very unexpected.

According to a second aspect of the present disclosure, provided is a preparation method for the hybrid dialkylphosphinic acid salt, including:
causing reaction I on a material comprising a mixture A and a metal element M source in an aqueous phase to obtain the hybrid dialkylphosphinic acid salt, wherein
the mixture A comprises diethylphosphinic acid and/or an alkali metal salt of the diethylphosphinic acid, ethyl-R₁-phosphinic acid and/or an alkali metal salt of the ethyl-R₁-phosphinic acid and R₁-R₂-phosphinic acid and/or an alkali metal salt of the R₁-R₂-phosphinic acid.

Optionally, the reaction I is carried out at 0-250°C, 0.1 MPa-10 MPa for 0.01-20 h.

Optionally, the reaction I is carried out at a pH of 0 to 4.

Optionally, the metal element is Al. The reaction I is carried out at a pH of 0-4, preferably 1-3.5, and more preferably 2.3-3.3.

Specifically, the reaction I does not produce a precipitate if the pH is too low. If the pH is too high, hydroxide of metal ions is formed, and impurities are introduced.

Optionally, a molar ratio of the diethylphosphinic acid and/or the alkali metal salt thereof to the ethyl-R₁-phosphinic acid and/or the alkali metal salt thereof to the R₁-R₂-phosphinic acid and/or the alkali metal salt thereof to the metal element M source is or approximates x:y:z:q, where q=1/n.

Alternatively, a molar ratio of the diethylphosphinic acid and/or the alkali metal salt thereof to the ethyl-R₁-phosphinic acid and/or the alkali metal salt thereof to the R₁-R₂-phosphinic acid and/or the alkali metal salt thereof in the mixture A is the same or substantially the same as the ratio of x:y:z in formula (I).

Solubility of the hybrid salt in water varies with M. For a hybrid salt with high solubility, the calculated mole numbers of the diethylphosphinic acid and/or the alkali metal salt thereof, the ethyl-R₁-phosphinic acid and/or the alkali metal salt thereof and the R₁-R₂-phosphinic acid and/or the alkali metal salt thereof in the mixture A differ from the values of x,y,z in the hybrid salt, and therefore the molar ratio to the M source will also varies. Moreover, in order to obtain more M-containing precipitates, the molar ratio of x to y to z to the M corresponding to reactants may also be greater than a theoretical calculation value.

In practice, actual values of x, y, z and q can be determined by phosphorus nuclear magnetic resonance.

Optionally, obtaining of the mixture A includes the following step:
introducing ethylene and C₄-C₁₂-olefin into an aqueous solution containing phosphinic acid and/or an alkali metal salt of the phosphinic acid and a radical initiator for reaction II, thereby obtaining the mixture A.

Optionally, a molar ratio of the phosphinic acid and/or the alkali metal salt of the phosphinic acid to the ethylene to the C₄-C₁₂-olefin is 1:0.24-1.76:1.76-0.24.

In an actual reaction, the consumption of ethylene and/or C₄-C₁₂-olefin is higher than a theoretical value due to existence of some side reactions, such as polymerization of ethylene and/or C₄-C₁₂-olefin producing long-chain dialkylphosphinic acid salt.

Optionally, the molar ratio of the phosphinic acid and/or the alkali metal salt of the phosphinic acid to the ethylene to the C₄-C₁₂-olefin is the same as or close to a theoretical value calculated according to the values of x, y and z in formula (I). In the reaction between the phosphinic acid or the alkali metal salt of the phosphinic acid and the ethylene or other olefins, the value of y has a maximum value less than 1. Depending on the type of olefin, the maximum value is 0.76 or below, with common values around 0.66. After the maximum value is reached, x or z increases, such that y cannot reach 1. If y=1 is to be prepared, a reaction intermediate product needs to be isolated and purified to remove the diethylphosphinic acid and/or the alkali metal salt thereof and the R₁-R₂-phosphinic acid and/or the alkali metal salt thereof, which is not cost-effective.

Specifically, in the reaction II, an order of addition of the ethylene and the C₄-C₁₂-olefin may be reversed. The ethylene and the C₄-C₁₂-olefin may be added simultaneously, or partially added first.

Optionally, in the reaction II, the phosphinic acid and/or the alkali metal salt thereof reacts with the C₄-C₁₂-olefin to obtain corresponding values of y and z before substantially completely or completely reacting with the ethylene. Substantially completely means that a total phosphorus content of ethyl phosphinate, R₁-phosphinate, R₂-phosphinate and hypophosphite in a reaction mixture is less than 5 mol % of a total phosphorus content in the reaction mixture.

Optionally, in the reaction II system, the mass of the water is 10%-99% of the total mass of the aqueous solution.

Specifically, in the reaction II system, if the amount of water is too little, a salting-out effect results in low solubility of olefin in the water, and a reaction slows down. If the amount of water is too much, a utilization rate of a reactor decreases.

Optionally, in the reaction II system, the mass of the water is 20%-95% of the total mass of the aqueous solution.

Optionally, in the reaction II system, the mass of the water is 45%-92% of the total mass of the aqueous solution.

Optionally, in the reaction II system, the mass of the water is 50%-90% of the total mass of the aqueous solution.

Optionally, in the reaction II system, the mass of the water is 55%-90% of the total mass of the aqueous solution.

Optionally, the reaction II is carried out at 0-250°C, 0-3 MPa for 0.01-50 h.

Specifically, if the temperature of the reaction II is too low, the reaction slows down. If the temperature is too high, the hypophosphite is prone to decomposition.

Optionally, the temperature of the reaction II is 10° C-200° C.

Specifically, when the pressure of the reaction II is greater than 3 MPa, requirements for a reaction apparatus are increased, and an operation is difficult.

Optionally, the pressure of the reaction II is 0.2-1.5 MPa.

Optionally, a molar ratio of the radical initiator to the phosphinic acid and/or the alkali metal salt thereof is 0.001-0.1:1.

Optionally, the molar ratio of the radical initiator to the phosphinic acid and/or the alkali metal salt thereof is 0.003-0.05:1.

Optionally, the radical initiator is selected from the group consisting of an azo initiator, a peroxide initiator, a photoinitiator and combinations thereof. The addition amount of the radical initiator can be determined according to actual needs.

Optionally, the azo initiator is selected from cationic and/or non-cationic azo initiators, including one or more of azobisisobutyronitrile, 4,4' azobis (4-cyanovaleric acid), 2,2'-azobis (2-methylbutyronitrile), 2,2'-azobis (2-amidinopropane) dihydrochloride, and 2,2'-azo dipropyl amidine dihydrochloride.

Optionally, the peroxide initiator is preferably an inorganic peroxide and an organic peroxide, particularly preferably one or more of hydrogen peroxide, ammonium persulfate, potassium persulfate, sodium persulfate, sodium percarbonate, benzoyl peroxide, di-tert-butyl peroxide, tert-butyl perbenzoate and peracetic acid.

Preferably, the radical initiator is a peroxide initiator. Particularly preferably, the radical initiator is selected from the group consisting of ammonium persulfate, potassium persulfate, and sodium persulfate.

Optionally, obtaining of the mixture A includes the following steps:
introducing C₄-C₁₂-olefin into an aqueous solution containing phosphinic acid and/or an alkali metal salt of the phosphinic acid and a radical initiator for reaction, after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing ethylene for reaction, thereby obtaining the mixture A. Here, the C₄-C₁₂-olefin may be pure C₄-C₁₂-olefin or mixed C₄-C₁₂-olefin.

Optionally, obtaining of the mixture A includes the following steps:
introducing C₄-C₁₂-olefin into an aqueous solution containing phosphinic acid and/or an alkali metal salt of the phosphinic acid and a radical initiator, and then introducing ethylene for reaction after the C₄-C₁₂-olefin completely or nearly completely reacts, thereby obtaining the mixture A. Here, the C₄-C₁₂-olefin may be pure C₄-C₁₂-olefin or mixed C₄-C₁₂-olefin.

Optionally, the phosphinic acid and/or the alkali metal salt of the phosphinic acid reacts with the C₄-C₁₂-olefin to obtain mono-R₁-phosphinic acid and/or an alkali metal salt thereof having a value of y or a value substantially close to y, z is controlled to be less than or equal to 0.76, the addition of C₄-C₁₂-olefin is stopped, the ethylene is added instead, and reaction is continued in the presence of the initiator. Subsequent reaction with a desired metal salt proceeds, such that a flame retardant of formula (I) is obtained. Here, the C₄-C₁₂-olefin may be pure C₄-C₁₂-olefin or mixed C₄-C₁₂-olefin.

Optionally, obtaining of the mixture A includes the following steps:
introducing C₄-C₁₂-olefin and portion of ethylene into an aqueous solution containing phosphinic acid and/or an alkali metal salt of the phosphinic acid and a radical initiator for reaction, and then introducing the remaining ethylene for reaction after the C₄-C₁₂-olefin and the portion of ethylene completely or nearly completely react, thereby obtaining the mixture A. Here, the C₄-C₁₂-olefin may be pure C₄-C₁₂-olefin or mixed C₄-C₁₂-olefin.

Optionally, obtaining of the mixture A includes the following steps:
introducing C₄-C₁₂-olefin and portion of ethylene into an aqueous solution containing phosphinic acid and/or an alkali metal salt of the phosphinic acid and a radical initiator for reaction, wherein a molar ratio of the ethylene to the total phosphorus of the phosphinic acid and/or the alkali metal salt of the phosphinic acid is less than (2x+y)/1 in formula (I), after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing the remaining ethylene for reaction, thereby obtaining the mixture A. Here, the C₄-C₁₂-olefin may be pure C₄-C₁₂-olefin or mixed C₄-C₁₂-olefin.

Optionally, obtaining of the mixture A includes the following steps:
introducing portion of ethylene into an aqueous solution containing phosphinic acid and/or an alkali metal salt of the phosphinic acid and a radical initiator, wherein a molar ratio of the portion of ethylene to the total phosphorus of the phosphinic acid and/or the alkali metal salt of the phosphinic acid is less than or equal to (2x+y)/1 in formula (I); after the portion of ethylene completely reacts, introducing C₄-C₁₂-olefin for reaction; and after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing the remaining ethylene for reaction, thereby obtaining the mixture A. Here, the C₄-C₁₂-olefin may be pure C₄-C₁₂-olefin or mixed C₄-C₁₂-olefin.

Optionally, obtaining of the mixture A includes the following steps:
introducing portion of ethylene into an aqueous solution containing phosphinic acid and/or an alkali metal salt of the phosphinic acid and a radical initiator; after the portion of the ethylene reacts completely or nearly completely, introducing C₄-C₁₂-olefin for reaction; and after the C₄-C₁₂-olefin reacts completely or nearly completely, introducing the remaining ethylene for reaction, thereby obtaining the mixture A. Here, the C₄-C₁₂-olefin may be pure C₄-C₁₂-olefin or mixed C₄-C₁₂-olefin.

Optionally, a molar ratio of the total amount of the ethylene to the total amount of the C₄-C₁₂-olefin is 0.14-7.33:1.

Optionally, the metal element M source is selected from the group consisting of metal element M salts and combinations thereof.

Optionally, the metal element M salt is selected from the group consisting of nitrates, sulfates, hydrochlorides, acetates and oxides of the metal element M and combinations thereof.

Optionally, the phosphinic acid and/or the alkali metal salt of the phosphinic acid reacts with the C₄-C₁₂-olefin and portion of the ethylene simultaneously in the presence of the radical initiator. The amount of the C₄-C₁₂-olefin and the ethylene is controlled. When a total mole percentage of ethyl-R₁-phosphinic acid or an alkali metal salt thereof and R₁-phosphinic acid or an alkali metal salt thereof in a reaction system is close to a value of y, a mole percentage of R₁-R₂-phosphinic acid or an alkali metal salt thereof is close to a value of z, and z is less than or equal to 0.76, the addition of the C₄-C₁₂-olefin is stopped. Then, the remaining ethylene is added, and the reaction is continued until the end in the presence of the initiator. Subsequent reaction with a desired metal salt proceeds, and a hybrid dialkylphosphinic acid salt of formula (I) is obtained. Here, the C₄-C₁₂-olefin may be pure C₄-C₁₂-olefin or mixed C₄-C₁₂-olefin.

Optionally, obtaining of the mixture A includes the following steps:
introducing ethylene into an aqueous solution containing phosphinic acid and/or an alkali metal salt of the phosphinic acid and a radical initiator for reaction, controlling the amount of the ethylene, and after a molar ratio of the introduced ethylene to the total phosphorus of the phosphinic acid and/or the alkali metal salt of the phosphinic acid reaches (y+2x)/1 in formula (I), stopping introducing the ethylene, and then introducing C₄-C₁₂-olefin in the presence of the initiator until the reaction ends, thereby obtaining the mixture A. Here, the C₄-C₁₂-olefin may be pure C₄-C₁₂-olefin or mixed C₄-C₁₂-olefin.

Specifically, after the reaction II is finished, the subsequent reaction can be directly carried out without separating the diethylphosphinic acid, the ethyl-R₁-phosphinic acid, the R₁-R₂-phosphinic acid or their alkali metal salts.

According to a third aspect of the present disclosure, a flame retardant is provided. The flame retardant comprises the hybrid dialkylphosphinic acid salt described above and/or a hybrid dialkylphosphinic acid salt prepared by the method described above.

Optionally, the flame retardant further comprises at least one of phosphates, phosphites, alkylphosphonates and alkyl phosphinates. A mole percent of these phosphorus-containing impurities in the flame retardant is less than or equal to 10%. The mole number of the flame retardant is calculated by the mole number of the phosphorus element comprised in the flame retardant.

According to a fourth aspect of the present disclosure, a flame-retardant material is provided. The flame-retardant material comprises a flame retardant P and a thermoplastic polymer material;
the flame retardant P is at least one of the flame retardants described above.

Optionally, a mass percent of the flame retardant P in the flame-retardant material is 1 %-35%.

Optionally, the flame-retardant material comprises 1wt%-35wt% of the flame retardant P and 65wt%-99wt% of the thermoplastic polymer material.

The thermoplastic polymer material in the present disclosure refers to plastics having characteristics of softening by heating and hardening by cooling.

Specifically, the required amount of the flame retardant P depends on the thermoplastic polymer material.

Optionally, the mass percent of the flame retardant P in the flame-retardant material is 3%-20%.

Optionally, the flame-retardant material further comprises a functional additive.

The functional additive is selected from the group consisting of a reinforcing agent, an anti-dripping agent, a stabilizer, a pigment, a dye, a charring catalyst, a dispersant, a nucleating agent, an inorganic filler, an antioxidant, and combinations thereof.

Optionally, a mass percent of the functional additive in the flame-retardant material is 5%-40%.

Optionally, the reinforcing agent is glass fibers.

Optionally, the anti-dripping agent is Teflon.

Optionally, the inorganic filler is selected from the group consisting of mica, calcium carbonate, calcium oxide, silica and combinations thereof.

Optionally, the flame-retardant material further comprises a flame retardant Q.

The flame retardant Q is a nitrogen-based flame retardant and/or a boron-based flame retardant.

Optionally, the nitrogen-based flame retardant is selected from the group consisting of melamine cyanurate, melamine polyphosphate, ammonium polyphosphate and combinations thereof.

The boron-based flame retardant is zinc borate.

Optionally, a mass percent of the flame retardant Q in the flame-retardant material is 0.5%-20%.

Optionally, the thermoplastic polymer material is a polyamide and/or a polyester.

Optionally, the polyamide is selected from the group consisting of aliphatic polyamide, aromatic polyamide, semi-aromatic polyamide, a copolymer of semi-aromatic polyamide and aliphatic polyamide, and combinations thereof.

According to common knowledge in the art, polyamide, also known as nylon, is a generic term for polymers including -NH-C(O)-amide groups in structural units, and is synthesized by condensation or ring-opening reactions of one or more of dicarboxylic acids and one or more of diamines, and/or one or more of amino acids, and/or one or more of lactams. The polyamide is generally classified into aliphatic polyamide, aromatic polyamide and semi-aromatic polyamide according to composition of a main chain. The semi-aromatic polyamide means that at least one monomer structure of its synthetic monomer comprises an aromatic group.

Optionally, the aliphatic polyamide is optionally selected from the group consisting of a copolymer of polyamide 6 and polyamide 66, polyamide 6, polyamide 66 and mixtures thereof.

Optionally, the semi-aromatic polyamide may be prepared from any one or more of aromatic dicarboxylic acids and any one or more of aliphatic diamines, or from any one or more of aromatic diamines and any one or more of aliphatic dicarboxylic acids. One or any more of dicarboxylic acid, diamine, lactam and amino acid may also be optionally added to the system, to prepare polyamide copolymers with corresponding properties. The added dicarboxylic acid is aromatic dicarboxylic acid and/or aliphatic dicarboxylic acid. The added diamine is aromatic diamine and/or aliphatic diamine. The added lactam may be aliphatic lactam or aromatic lactam. The added amino acid may be aromatic amino acid or aliphatic amino acid.

Optionally, the semi-aromatic polyamide is prepared from one or more aromatic dicarboxylic acids optionally selected from terephthalic acid, isophthalic acid, and naphthalenedicarboxylic acid, and one or more aliphatic diamines optionally selected from butylene diamine, hexane diamine, octane diamine, decane diamine, and 2-methylpentylene diamine.

Optionally, the semi-aromatic polyamide is prepared from aliphatic diamine, aromatic dicarboxylic acid, and aliphatic dicarboxylic acid.

Optionally, the semi-aromatic polyamide is prepared from aliphatic diamine and aromatic dicarboxylic acid. Optionally, aliphatic dicarboxylic acid may also be added, and a mole fraction of aliphatic dicarboxylic acid accounts for 0-45% of the total amount of dicarboxylic acid, that is, the mole number of aliphatic dicarboxylic acid/(the mole number of aliphatic dicarboxylic acid+the mole number of aromatic dicarboxylic acid)=0-45%.

Optionally, the aromatic dicarboxylic acid is optionally selected from the group consisting of terephthalic acid, isophthalic acid, naphthalenedicarboxylic acid and combinations thereof; the aliphatic diamine is optionally selected from the group consisting of butylene diamine, hexane diamine, octane diamine, decane diamine, 2-methylpentylene diamine and combinations thereof; the aliphatic dicarboxylic acid is optionally selected from the group consisting of adipic acid, succinic acid, sebacic acid, suberic acid and combinations thereof.

Optionally, the polyamide is optionally selected from the group consisting of polyhexamethylene terephthalamide (PA6T), polyhexamethylene isophthalamide (PA6I), a terephthalic acid/hexamethylenediamine/caprolactam copolymer (PA6T/6), a terephthalic acid/hexamethylenediamine/adipic acid copolymer (PA6T/66), a terephthalic acid/hexamethylenediamine/adipic acid/isophthalic acid copolymer (PA6T/6I/66), Poly(iminocarbonyl-1,4-phenylenecarbonylimino-1,9-nonanediyl) (PA9T), polydecanediamide terephthaloyl (PA10T), polydodecylenediamine terephthaloyl (PA12T), a terephthalic acid/hexamethylenediamine/dodecylactam copolymer (PA6T/12), poly-adipic acid meta-xylenediamine (MXD6), a terephthalic acid/hexamethylenediamine/2-methylpentylenediamine copolymer (PA6T/2-MPMDT), a terephthalic acid/2,2,4-trimethylhexamethylenediamine/2,4,4-trimethylhexamethylenediamine copolymer, and combinations thereof.

Optionally, the aliphatic polyamide is selected from the group consisting of polyamide 6, polyamide 66, a copolymer of polyamide 6 and polyamide 66, and combinations thereof.

Optionally, the semi-aromatic polyamide is polyphthalamide (PPA).

Optionally, the polyester is polybutylene terephthalate (PBT).

In the embodiments of the present disclosure, the values of x, y and z in formula (I) do not consider the amount of other phosphorus-containing impurities, x+y+z=1, and x+z>0. A flame retardant having composition of formula (I) may comprise trace amounts of other phosphorus-containing impurities. Due to impurities in raw materials or impurities generated by a synthesis process, trace amounts of phosphates, phosphites, alkyl phosphonates and alkyl phosphinates may exist in the flame retardant. Some telomer products, such as ethyl n-tetradecylphosphinate and ethyl cetylphosphinate, derived from polymerization or copolymerization of ethylene and/or C₄-C₁₂-olefin may also exist as impurities in the flame retardant of formula (I). However, as long as the total molar amount of these other phosphorus-containing ions does not exceed 5% mol of the total phosphorus, they do not influence the normal operation of the flame retardant of formula (I).

In the embodiments of the present disclosure, a ratio of x to y to z in formula (I) may be determined by ³¹P-NMR (nuclear magnetic resonance) after alkaline/acid hydrolysis of the flame retardant. Diethylphosphinate ion, ethyl-R₁-phosphinate ion and R₁-R₂-phosphinate ion have different chemical shifts of ³¹P and present independent peaks in ³¹P-NMR spectra in most cases.

Peak areas of these peaks correspond to molar concentrations of the dialkylphosphinate ions respectively. Since some dialkylphosphinate ions with the same chemical formula will have isomers, different peaks are shown in the phosphorus NMR spectra, and these isomers are grouped together during the calculation of the values of x,y and z. For example, when R₁ and R₂ are butyl, five peaks appear in the ³¹P-NMR spectrum of the obtained hybrid dialkylphosphinic acid salt and these five peaks correspond to ethyl-sec-butyl-phosphinate ion, n-butyl-sec-butyl-phosphinate ion, diethylphosphinate ion, ethyl-n-butyl-phosphinate ion and di-n-butyl-phosphinate ion respectively. A molar concentration of diethylphosphinate ion corresponds to x, a sum of molar concentrations of ethyl sec-butyl-phosphinate ion and ethyl n-butyl-phosphinate ion (abbreviated as a molar concentration of ethyl-butyl-phosphinate ion) corresponds to y, a sum of molar concentrations of di-n-butyl-phosphinate ion and n-butyl sec-butyl-phosphinate ion (abbreviated as a molar concentration of dibutylphosphinate ion) corresponds to z, and the ratio of the three is the ratio of x to y to z. In some cases, telomeric dialkylphosphinate ions are present in small amounts and have chemical shifts close to the corresponding dialkylphosphinate ions, such that the telomeric dialkylphosphinate ions are incorporated into the corresponding dialkylphosphinate ions when integrated.

The present disclosure have the following beneficial effects.
(1) The hybrid dialkylphosphinic acid salt having composition of formula (I) provided in the present disclosure has features low addition amount, high thermal stability, high flame-retardant efficiency for polymer material and desirable cost-effectiveness. The present disclosure overcomes the disadvantage of low flame-retardant efficiency of diethylphosphinate and long-chain dialkylphosphinic acid salt used along for polymer materials as well as the poor thermal stability and more smoke of long-chain dialkylphosphinic acid salt. The hybrid dialkylphosphinic acid salt of the present disclosure can be widely applied to flame-retard polymer materials which require high-temperature processing.
(2) The present disclosure provides a preparation method for a hybrid dialkylphosphinic acid salt, which avoids a shortcoming that different dialkylphosphinic acids need to be independently prepared separately. Since water is used as a reaction solvent, the process is environmentally friendly. The raw materials are easily available and the cost-effectiveness is high.

### Brief Description of the Drawings

FIG. 1 shows thermogravimetric curves of hybrid aluminum dialkylphosphinates with different values of x,y, and z (R₁ and R₂ in corresponding formula (I) are butyl, and C₄-C₁₂-olefin used in the reaction II is butene) and aluminum diethylphosphinate and aluminum dibutylphosphinate.
FIGS. 2a and 2b show XRD curves of hybrid dialkylphosphinates with different values of x, y, and z (R₁ and R₂ in corresponding formula (I) are butyl, and C₄-C₁₂-olefin used in the reaction II is butene), aluminum diethylphosphinate, aluminum dibutylphosphinate and a physical mixture of aluminum dibutylphosphinate and aluminum diethylphosphinate, where FIG. 2b is a partial enlargement of the strongest absorption peak in FIG. 2a.
FIGS. 3 and 4 are ³¹P-NMR spectra of hybrid dialkylphosphinates (R₁ and R₂ in corresponding formula (I) are butyl, and C₄-C₁₂-olefin used in the reaction II is butene) prepared in Examples 3 and 4 after alkaline hydrolysis.

### Detailed Description of the Embodiments

The present disclosure is described in detail below in conjunction with examples, but the present disclosure is not limited to these examples.

Unless otherwise specified, raw materials in the examples of the present disclosure were purchased commercially.

The raw materials used in the examples are as follows:
PA66 (also known as polyamide 66 or nylon 66): Zytel 70G35 HSL NC010 from DuPont, American, where a glass fiber content is 35% by weight;
PA6 (also known as polyamide 6 or nylon 6): Zytel 73G30L NC010 from DuPont, American, where a glass fiber content is 30% by weight;
ADP: Aluminum diethylphosphinate, Exolit OP1230 from Clariant, Germany;
MPP: Melamine polyphosphate from Suzhou Kaima Chemical Technology Co., LTD.;
Zinc borate: Sinopharm Chemical Reagent Co., LTD.;
Antioxidant 1010: tetrakis[β-(3,5-di-tert-butyl-4-hydroxyphenyl) propionic acid]pentaerythritol ester, from Shanghai Macklin Biochemical Co., Ltd.
Antioxidant 168: tris[2,4-di-tert-butyl phenyl] phosphite, from Strem Chemicals, Inc., American;
Composite antioxidant: prepared by mixing the antioxidant 1010 (tetrakis[beta-(3, 5-di-tert-butyl-4-hydroxyphenyl) propionic acid] pentaerythritol ester) and the antioxidant 168 (tris[2, 4-di-tert-butylphenyl] phosphite) in a weight ratio of 1:1;
Combustion test standard: GB/T 2408-2008 standard;
Nuclear magnetic resonance (NMR) test: using instruments with models of AVANCE III 600MHz and AVANCE III 400MHz, from Bruker, Germany;
Phosphorus nuclear magnetic resonance spectrum (³¹P-NMR) test method: pre-delay D1=10 seconds, scanning is performed for 32 times, and a peak area ratio is regarded as a ratio of mole number of various phosphonate ions;
Model of an instrument for X-ray diffraction (XRD) test: D8 ADVANCE DAVINCI, from Bruker, Germany;
Model of an instrument used for TGA thermal weight loss treatment: Q500, from TA Company, USA., at heating rate of 10°C/min in the presence of nitrogen.

### Example 1

### Preparation of hybrid salt of formula (I), where x=0.40, y=0.56, z=0.04, M=Al, n=3

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C and a pressure gauge showed 0.25 MPa. Then an aqueous solution of sodium persulfate with a mass concentration of 4% was injected at a constant speed of 10 ml/h. The butene was continuously introduced into the reactor. The amount of olefin introduced was measured by a gas flow meter. After 4 hours, the flow of butene was stopped and ethylene was started to be introduced. After 12 hours, the pressure of the reactor did not drop. A colorless transparent reaction solution was obtained after cooled, release of pressure, N₂ purging, and discharging. Samples were taken during the reaction and from the final reaction solution for nuclear magnetic resonance. ³¹P-NMR results are shown in Table 1.

**Table 1**

| Comp onent | Ethyl butylpho sphinate ion | Diethylph osphinate ion | Dibutylp hosphinat e ion | Other double-a ddition product ion | Ethylph osphinat e ion | Butylpho sphinate ion | Ethylpho sphonate ion | Butylph osphonat e ion | Hypoph osphite ion | Phosphi te ion |
|---|---|---|---|---|---|---|---|---|---|---|
| 4h, mol% | 0.00% | 0.00% | 1.85% | 0.00% | 0.00% | 44.95% | 0.00% | 0.00% | 51.93% | 1.27% |
| 12h, mol% | 52.60% | 41.72% | 3.78% | 0.00% | 0.00% | 0.00% | 0.73% | 0.22% | 0.06% | 0.89% |

| | | | | | | | | | | |
|---|---|---|---|---|---|---|---|---|---|---|
| Notes: In the table, the ethyl butylphosphinate ion comprises ethyl sec-butylphosphinate ion and ethyl n-butylphosphinate ion; the dibutylphosphinate ion comprises n-butyl sec-butylphosphinate ions (R₁≠R₂, which are n-butyl and sec-butyl respectively) and di-n-butylphosphinate ion (R₁=R₂=n-butyl); other double additions include di-sec-butylphosphinate ion and dialkylphosphinate ion (a telomer derived from the polymerization of ethylene and/or butene). The butylphosphinate ion is the sum of sec-butylphosphinate ion and n-butylphosphinate ion; the butylphosphonate ion is the sum of sec-butylphosphonate ion and n-butylphosphonate ion. These terms are used here and elsewhere in the present disclosure. | | | | | | | | | | |

307.59 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 48.15 g of white solid. A sample was dissolved in an aqueous solution of sodium hydroxide. Phosphorus nuclear magnetic resonance was performed and the ³¹P-NMR spectrum showed that the molar content of diethylphosphinate ion was 40.23%, the molar content of ethyl n-butylphosphinate ion was 51.98%, the molar content of ethyl sec-butylphosphinate ion was 4.10%, and the molar content of di-n-butylphosphinate ion was 3.69%. The molar fractions of the hypophosphinate ions with the same chemical formula were added up (that is, the value of y corresponding to the sum of the ethyl n-butylphosphinate ion and the ethyl sec-butylphosphinate ion was calculated), thus obtaining x=0.40, y=0.56, and z=0.04.

An XRD test was performed on the sample. An interplanar spacing corresponding to the characteristic peak with a highest relative intensity determined by XRD was 11.143Å (100%).

### Example 2

### Preparation of hybrid salt of formula (I), where x=0, y=0.24, z=0.76, M=Al, n=3

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C and a pressure gauge showed 0.25 MPa. Then an aqueous solution of sodium persulfate with a mass concentration of 4% was injected at a constant speed of 10 ml/h. The butene was continuously introduced into the reactor. The amount of olefin introduced was measured by a gas flow meter. After 8.5 hours, the flow of butene was stopped and ethylene was started to be introduced. After 15 hours, the pressure of the reactor did not drop. A colorless transparent reaction solution was obtained after cooled, release of pressure, N₂ purging, and discharging. Samples were taken from the reaction solution for nuclear magnetic resonance. ³¹P-NMR results are shown in Table 2.

**Table 2**

| Compo nent | Ethyl butylphosph inate ion | Dibutylphosp hinate ion | Other double-add ition products | Butylphosph inate ion | Ethylphosph onate ion | Butylphosph onate ion | Hypophos phite ion | Phosp hite ion |
|---|---|---|---|---|---|---|---|---|
| mol% | 23.36% | 74.63% | 0.05% | 0.32% | 0.24% | 0.53% | 0.03% | 0.84% |

353.74 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 66.54 g of white solid. A sample was dissolved in an aqueous solution of sodium hydroxide. Phosphorus nuclear magnetic resonance was performed and the ³¹P-NMR spectrum showed that the molar content of ethyl sec-butylphosphinate was 2.42%, the molar content of ethyl n-butylphosphinate ion was 21.13%, the molar content of n-butyl sec-butylphosphinate ion was 7.25%, the molar content of di-n-butylphosphinate ion was 68.63%, and the total molar content of other phosphorous-containing impurities such as butylphosphinate ion and butylphosphonate ion was 0.57%. The molar fractions of the hypophosphinate ions with the same chemical formula were added up (that is, the molar fractions of ethyl n-butylphosphinate ion and ethyl sec-butylphosphinate ion were added up to calculate the value of y; the molar fractions of n-butyl sec-butylphosphinate ion, di-n-butylphosphinate ion and dialkylphosphinic acid telomers were added up to calculate the value of z). After normalization, x=0, y=0.24, and z=0.76.

An XRD test was performed on the sample. An interplanar spacing corresponding to the characteristic peak with a highest relative intensity determined by XRD was 12.468Å (100%).

### Example 3

### Preparation of hybrid salt of formula (I), where x=0, y=0.32, z=0.68, M=Al, n=3

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C and a pressure gauge showed 0.25 MPa. Then an aqueous solution of sodium persulfate with a mass concentration of 4% was injected at a constant speed of 10 ml/h. The butene was continuously introduced into the reactor. The amount of olefin introduced was measured by a gas flow meter. After 7 hours, the flow of butene was stopped and ethylene was started to be introduced. After 15.5 hours, the pressure of the reactor did not drop. A colorless transparent reaction solution was obtained after cooled, release of pressure, N₂ purging, and discharging. Samples were taken from the reaction solution for nuclear magnetic resonance. ³¹P-NMR results are shown in Table 3.

**Table 3**

| Compon ent | Ethyl butylphosphi nate ion | Dibutylphosphin ate ion | Other double-addit ion products | Butylphosphi nate ion | Ethylphospho nate ion | Butylphospho nate ion | Phosphite ion |
|---|---|---|---|---|---|---|---|
| mol% | 31.01% | 67.04% | 0.36% | 0.19% | 0.27% | 0.45% | 0.68% |

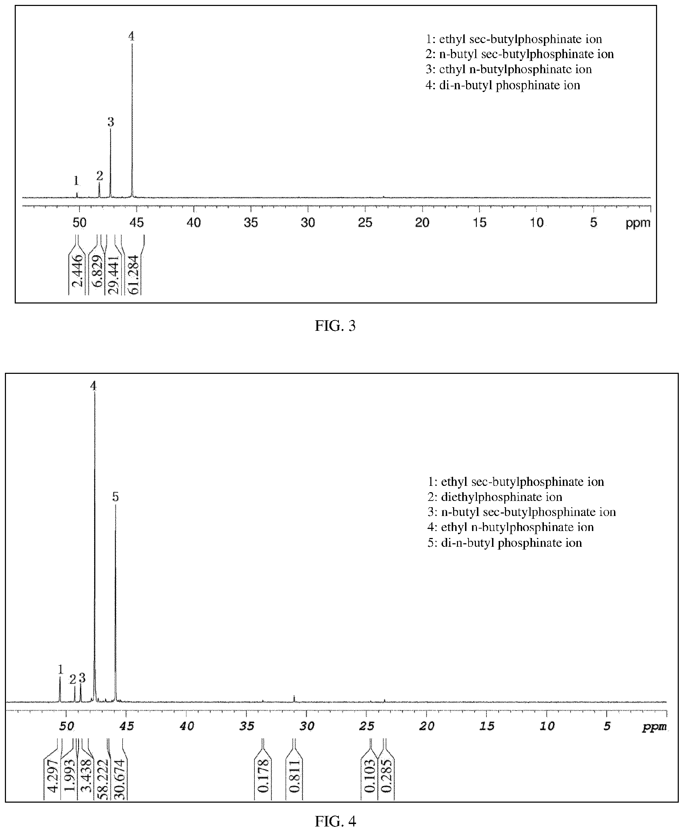

334.45 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 64.81 g of white solid. A sample was dissolved in an aqueous solution of sodium hydroxide. Phosphorus nuclear magnetic resonance was performed and the ³¹P-NMR spectrum is showed in FIG. 3. The ³¹P-NMR spectrum showed that the molar content of ethyl sec-butylphosphinate ion was 2.45%, the molar content of ethyl n-butylphosphinate ion was 29.44%, the molar content of n-butyl sec-butylphosphinate ion was 6.83%, and the molar content of di-n-butylphosphinate ion was 61.28%. The molar fractions of the hypophosphinate ions with the same chemical formula were added up (that is, the molar fractions of ethyl n-butylphosphinate ion and ethyl sec-butylphosphinate ion were added up to calculate the value of y; the molar fractions of n-butyl sec-butylphosphinate ion and di-n-butylphosphinate ion were added up to calculate the value of z). After normalization, x = 0, y=0.32, z=0.68.

An XRD test was performed on the sample. An interplanar spacing corresponding to the characteristic peak with a highest relative intensity determined by XRD was 12.319Å (100%).

### Example 4

### Preparation of hybrid salt of formula (I), where x=0.02, y=0.63, z=0.35, M=Al, n=3

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C and a pressure gauge showed 0.25 MPa. Then an aqueous solution of sodium persulfate with a mass concentration of 4% was injected at a constant speed of 10 ml/h. The butene was continuously introduced into the reactor. The amount of olefin introduced was measured by a gas flow meter. After 5.5 hours, the flow of butene was stopped and ethylene was started to be introduced. After 13 hours, the pressure of the reactor did not drop. A colorless transparent reaction solution was obtained after cooled, release of pressure, N₂ purging, and discharging. Samples were taken from the reaction solution for nuclear magnetic resonance. ³¹P-NMR results are shown in Table 4.

**Table 4**

| Compo nent | Ethyl butylphosp hinate ion | Diethylphos phinate ion | Dibutylphos phinate ion | Other double-ad dition products | Ethylphos phinate ion | Butylphos phinate ion | Ethylphosph onate ion | Butylphos phonate ion | Phosphi te ion |
|---|---|---|---|---|---|---|---|---|---|
| mol% | 60.66% | 2.47% | 34.68% | 0.48% | 0.23% | 0.08% | 0.38% | 0.44% | 0.58% |

329.57 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 59.60 g of white solid. A sample was dissolved in an aqueous solution of sodium hydroxide. Phosphorus nuclear magnetic resonance was performed and the ³¹P-NMR spectrum is showed in FIG. 4. The ³¹P-NMR spectrum showed that the molar content of diethylphosphinate ion was 1.99%, the molar content of ethyl sec-butylphosphinate was 4.30%, the molar content of ethyl n-butylphosphinate ion was 58.22%, the molar content of n-butyl sec-butylphosphinate ion was 3.44%, the molar content of di-n-butylphosphinate ion was 30.67%, and the total molar content of other phosphorous-containing impurities such as ethylphosphinate ion, butylphosphinate ion, ethylphosphonate ion, butylphosphonate ion was 1.38%. The molar fractions of the hypophosphinate ions with the same chemical formula were added up (that is, the molar fractions of ethyl n-butylphosphinate ion and ethyl sec-butylphosphinate ion were added up to calculate the value of y; the molar fractions of n-butyl sec-butylphosphinate ion, di-n-butylphosphinate ion and dialkylphosphinic acid telomers were added up to calculate the value of z. Here, the dialkylphosphinic acid telomers are also incorporated into the adjacent di-n-butyl phosphinate ion), and after normalization, x=0.02, y=0.63, z=0.35.

An XRD test was performed on the sample. An interplanar spacing corresponding to the characteristic peak with a highest relative intensity determined by XRD was 11.934Å (100%).

### Example 5

### Preparation of hybrid salt of formula (I), where x=0.22, y=0.67, z=0.11, M=Al, n=3

100 g of sodium hypophosphite monohydrate was dissolved in 500 g of water, and then placed into a 1 L stainless steel pressure reactor. The reactor was purged by nitrogen twice, vacuumized, and subsequently filled with butene. A reaction solution was heated to about 90° C and a pressure gauge showed 0.15 MPa. Then an aqueous solution of sodium persulfate with a mass concentration of 4% was injected at a constant speed of 10 ml/h. The butene was continuously introduced into the reactor. The amount of olefin introduced was measured by a gas flow meter. After 7.5 hours, the flow of butene was stopped and ethylene was started to be introduced. After 21 hours, the pressure of the reactor basically did not drop. A colorless transparent reaction solution was obtained after cooled, release of pressure, N₂ purging, and discharging. Samples were taken from the reaction solution for nuclear magnetic resonance. ³¹P-NMR results are shown in Table 5.

**Table 5**

| Compo nent | Ethyl butylphosp hinate ion | Diethylphosp hinate ion | Dibutylphosp hinate ion | Ethylphosp hinate ion | Butylphosp hinate ion | Ethylphos phonate ion | Butylphosph onate ion | Phosphi te ion |
|---|---|---|---|---|---|---|---|---|
| mol% | 61.97% | 23.17% | 10.78% | 0.18% | 0.16% | 1.15% | 0.82% | 1.77% |

374.84 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 52.13 g of white solid. A sample was dissolved in an aqueous solution of sodium hydroxide. Phosphorus nuclear magnetic resonance was performed and the ³¹P-NMR spectrum showed that the molar content of diethylphosphinate ion was 21.32%, the molar content of ethyl sec-butylphosphinate was 4.52%, the molar content of ethyl n-butylphosphinate ion was 62.02%, the molar content of n-butyl sec-butylphosphinate ion was 1.11%, the molar content of di-n-butylphosphinate ion was 9.66%, and the total molar content of other phosphorous-containing impurities such as ethylphosphinate ion, butylphosphinate ion, ethylphosphonate ion, butylphosphonate ion and phosphite ion was 1.37%. The molar fractions of the hypophosphinate ions with the same chemical formula were added up (that is, the molar fractions of ethyl n-butylphosphinate ion and ethyl sec-butylphosphinate ion were added up to calculate the value of y; the molar fractions of n-butyl sec-butylphosphinate ion and di-n-butylphosphinate ion were added up to calculate the value of z.) After normalization, x=0.22, y=0.67, and z=0.11. An XRD test was performed on the sample. An interplanar spacing corresponding to the characteristic peak with a highest relative intensity determined by XRD was 11.384Å (100%).

### Example 6

### Preparation of hybrid salt of formula (I), where x=0.59, y=0.39, z=0.02, M=Al, n=3

100 g of sodium hypophosphite monohydrate was dissolved in 500 g of water, and then placed into a 1 L stainless steel pressure reactor together with 39.7 g of hexene. The reactor was purged by nitrogen twice, vacuumized, and subsequently filled with portion of ethylene. A reaction solution was heated to about 90° C. Then an aqueous solution of sodium persulfate with a mass concentration of 4% was injected at a constant speed of 10 ml/h. After reaction for 8.5 hours, the remaining ethylene was introduced. After 14.5 hours, the pressure of the reactor did not drop. A colorless transparent reaction solution was obtained after cooled, release of pressure, N₂ purging, and discharging. Samples were taken from the reaction solution for nuclear magnetic resonance. ³¹P-NMR results are shown in Table 6.

**Table 6**

| Compo nent | Ethyl hexylphos phinate ion | Diethylpho sphinate ion | Dihexylpho sphinate ion | Ethylpho sphinate ion | Hexylphos phinate ion | Ethylphosp honate ion | Hexylphos phonate ion | Hypoph osphite ion | Phosph ite ion |
|---|---|---|---|---|---|---|---|---|---|
| mol% | 35.49% | 56.19% | 2.15% | 0.88% | 0.32% | 1.88% | 0.44% | 0.21% | 2.44% |

Notes: In the table, the ethyl hexylphosphinate ion comprises ethyl sec-hexylphosphinate ion and ethyl n-hexylphosphinate ion; the dihexylphosphinate ion comprises n-hexyl sec-hexylphosphinate ion (R₁≠R₂, which are n-hexyl and sec-hexyl, respectively) and di-n-hexylphosphinate ion (R₁=R₂=n-hexyl); the hexylphosphinate ion comprises sec-hexylphosphinate ion and n-hexylphosphinate ion; the hexylphosphonate ion is the sum of sec-hexylphosphonate ion and n-hexylphosphonate ion.

367.37 g of the above solution (0.36 mol of phosphorus) was slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 50.35 g of white solid. A sample was dissolved in an aqueous solution of sodium hydroxide. Phosphorus nuclear magnetic resonance was performed and the ³¹P-NMR spectrum showed that the molar content of diethylphosphinate ion was 57.54%, the molar content of ethyl hexylphosphinate was 38.19%, the molar content of dihexylphosphinate ion was 2.21%, and the total molar content of other phosphorous-containing impurities such as ethylphosphinate ion, hexylphosphinate ion, ethylphosphonate ion, hexylphosphonate ion and phosphite ion was 2.06%. After normalization, x=0.59, y=0.39, and z=0.02.

An XRD test was performed on the sample. An interplanar spacing corresponding to the characteristic peak with a highest relative intensity determined by XRD was 11.639Å (100%).

### Example 7

### Preparation of hybrid salt of formula (I), where x=0.01, y=0.52, z=0.47, M=Cu, n=2

137.32 g of the above solution (0.15 mol of phosphorus) obtained in the first step in the above Example 4 was slowly mixed with an aqueous solution containing 18.73 g of copper sulfate pentahydrate with a mass concentration of 25% at normal pressure. Reaction temperature was controlled to 70 °C, and a pH value was adjusted to be less than 4. A large amount of precipitates were obtained. After addition and mixing were completed, the temperature was held for 0.5 hour. Filtering was performed when the solution was hot. A filter cake was washed with clear water to pH>4.5. The filter cake was then dried at 120 °C to obtain 19.53 g of solid, with a yield of 70%. A sample was dissolved in an aqueous solution of sodium hydroxide. Phosphorus nuclear magnetic resonance was performed and the ³¹P-NMR spectrum showed that the molar content of diethylphosphinate ion was 0.80%, the molar content of ethyl sec-butylphosphinate ion was 2.76%, the molar content of ethyl n-butylphosphinate ion was 49.60%, the molar content of n-butyl sec-butylphosphinate ion was 4.48%, and the molar content of di-n-butylphosphinate ion was 42.36%. The molar fractions of the hypophosphinate ions with the same chemical formula were added up (that is, the value of y corresponding to the sum of the ethyl n-butylphosphinate ion and the ethyl sec-butylphosphinate ion was calculated), thus obtaining x=0.01, y=0.52, and z=0.47. Due to the difference in solubility of different dialkylphosphonate copper salts, the yield of this example is low, and the values of x,y,z in the resulting hybrid salt are significantly different from those of other metal hybrid salts obtained from the same phosphorus raw materials.

An XRD test was performed on the sample. An interplanar spacing corresponding to the characteristic peak with a highest relative intensity determined by XRD was 14.292Å (100%).

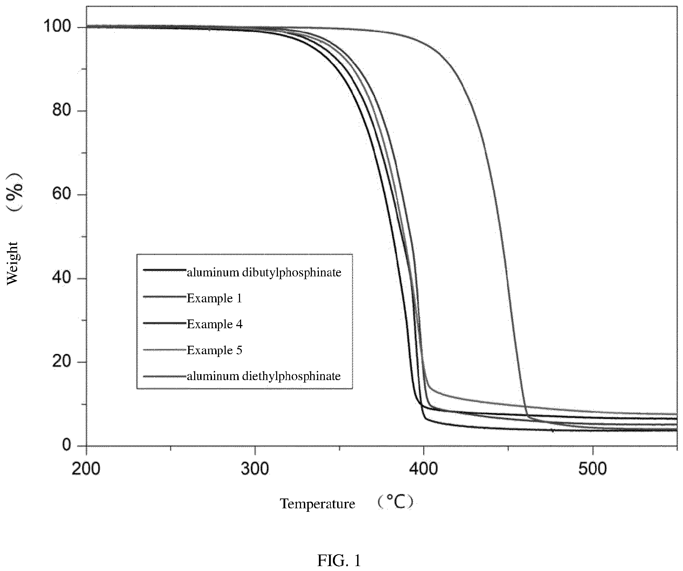

FIG. 1 shows thermogravimetric curves (TGA) of hybrid salts with different values of x, y, z (Example 1, Example 4, and Example 5) and aluminum diethylphosphinate and aluminum dibutylphosphinate (Comparative Example 1). As can be seen from the figure, the higher the value of z, the lower the thermal stability of the hybrid salt, and the higher the value of x, the higher the thermal stability.

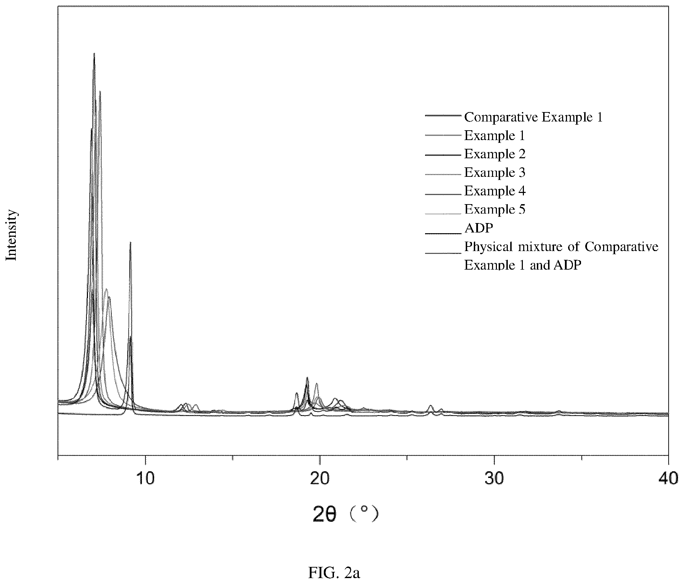

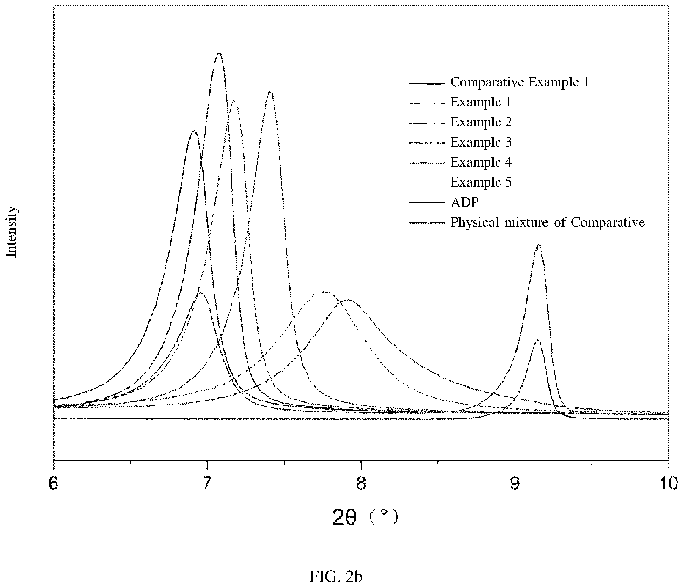

FIG. 2a shows an XRD spectrum of hybrid salts with different values of x, y, z (Examples 1-5), aluminum dibutylphosphinate (Comparative Example 1), aluminum diethylphosphinate (ADP) and a physical mixture of aluminum dibutylphosphinate and ADP. FIG. 2b is a partial enlargement of the strongest absorption peak in FIG. 2a. It can be seen from FIG. 2b that a simple physical mixture has two independent peaks in a strongest absorption peak region in the XRD spectrum, d values of the two peaks are close to d values of aluminum diethylphosphinate and aluminum dibutylphosphinate respectively. The hybrid salts of formula (I) have only one peak or overlapping peaks, and d values basically fall between the d values of the aluminum diethylphosphinate and the aluminum dibutylphosphinate. These results indicate that the hybrid dialkylphosphinic acid salts having composition of formula (I) in the present invention are not simple mixtures of aluminum diethylphosphinate, aluminum ethyl butylphosphinate and aluminum dibutylphosphinate, but those containing structures consisting of at least two of diethylphosphinate ion, ethyl butylphosphinate ion and dibutylphosphinate ion paired with the same aluminum atom.

### Example 8

Polyamide PA66, the hybrid salt prepared in Example 1, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280 °C for 10 minutes and the pressure was held at 10 MPa for 5 minutes. Cold pressing was then performed. The sample was cut and tested after cooling. The flame retardant rating of the sample was UL94 V-0 (1.6 mm).

### Example 9

Polyamide PA6, the hybrid salt prepared in Example 1, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-0 (1.6 mm).

### Examples 10-22

The samples of the hybrid salts prepared in Examples 1-7 were prepared and tested in polyamide PA66 and PA6 separately in manners described in Examples 8 and 9. Results are shown in Table 7.

### Comparative Example 1 Preparation of aluminum dibutylphosphinate

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C. Then an aqueous solution of sodium persulfate with a mass concentration of 4% was injected at a constant speed of 10 ml/h. The butene was continuously introduced into the reactor. The amount of butene introduced was measured by a gas flow meter. After 25.5 hours, the pressure of the reactor did not drop. The reaction was stopped, and a transparent reaction solution was obtained after cooled, release of pressure, N₂ purging, and discharging. Samples were taken from the reaction solution for nuclear magnetic resonance. ³¹P-NMR results showed that the molar content of n-butyl sec-butylphosphonic acid was 10.56%, the molar content of di-n-butylphosphonic acid was 84.92%, the molar content of dibutylphosphonic acid telomers was 3.52%, and the molar content of other by-products such as butylphosphinic acid, butyl phosphonic acid and phosphorous acid was 1.00%.

394 g of the above solution (0.3996 mol of phosphorus) was slowly mixed with an aqueous solution containing 44.38 g of aluminum sulfate octadecahydrate with a mass concentration of 10%. Reaction temperature was controlled to 70 °C, and a pH value was adjusted to be less than or equal to 3.0. A large amount of precipitates were obtained. After addition and mixing were completed, the temperature was held for 0.5 hour. Filtering was performed slowly when the solution was hot. A filter cake was washed with clear water to pH>4.5. The filter cake was then dried at 120 °C to obtain 67.28 g of white solid.

An XRD test was performed on the sample. An interplanar spacing corresponding to the characteristic peak with a highest relative intensity determined by XRD was 12.770Å (100%).

### Comparative Example 2

Polyamide PA66, the aluminum dibutylphosphinate prepared in Comparative Example 1, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 no rating (1.6 mm).

### Comparative Example 3

Polyamide PA6, the aluminum dibutylphosphinate prepared in Comparative Example 1, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-1 (1.6 mm).

### Comparative Example 4

Polyamide PA66, aluminum diethylphosphinate, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 no rating (1.6 mm).

### Comparative Example 5

Polyamide PA6, aluminum diethylphosphinate, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 no rating (1.6 mm).

**Table 7 Test results of Examples 10-22**

| | Exam ple 10 | Exam ple 11 | Exam ple 12 | Exam ple 13 | Exam ple 14 | Exam ple 15 | Exam ple 16 | Exam ple 17 | Exam ple 18 | Exam ple 19 | Exam ple 20 | Exam ple 21 | Exam ple 22 |
|---|---|---|---|---|---|---|---|---|---|---|---|---|---|
| PA66 | 79.6 | | 79.6 | | 79.6 | | 79.6 | | 79.6 | | 79.6 | 79.6 | 79.6 |
| PA6 | | 79.6 | | 79.6 | | 79.6 | | 79.6 | | 79.6 | | | |
| Flame retardant | Exam ple 2 | Exam ple 2 | Exam ple 3 | Exam ple 3 | Exam ple 4 | Exam ple 4 | Exam ple 5 | Exam ple 5 | Exam ple 6 | Exam ple 6 | Exam ple 7 | Exam ple 1 | Exam ple 1 |
| Parts of flame retardant | 20 | 20 | 20 | 20 | 20 | 20 | 20 | 20 | 20 | 20 | 18 | 18 | 18 |
| MPP | | | | | | | | | | | 2 | 2 | 1.25 |
| Zinc borate | | | | | | | | | | | | | 0.75 |
| Composi te antioxida nt | 0.4 | 0.4 | 0.4 | 0.4 | 0.4 | 0.4 | 0.4 | 0.4 | 0.4 | 0.4 | 0.4 | 0.4 | 0.4 |
| UL-94 | V-0 | V-0 | V-0 | V-0 | V-0 | V-0 | V-0 | V-0 | V-0 | V-0 | V-0 | V-0 | V-0 |

Examples 8-22 illustrate that a flame retardant comprising the hybrid dialkylphosphinic acid salt of the present disclosure has outstanding flame-retardant efficiency for polyamide. The flame retardant PA66 samples prepared have desirable toughness and no obvious degradation. No obvious smoke was observed during combustion test of flame retardant polyamide. Comparative Examples 2-3 show that the flame-retardant efficiency of dibutylphosphinate for polyamide is not as good as that of the hybrid salts of formula (I) according to the present disclosure and when the flame retardant polyamide is burning, lot of smoke is observed, resulting in poor escape environment. It can be seen from FIG. 1 that the thermal stability of the dibutylphosphinate is too low, and also flame retardant PA66 containing dibutylphosphinate is brittle, indicating the occurrence of degradation. Comparative Examples 4-5 illustrates that pure aluminum diethylphosphinate has low flame-retardant efficiency for polyamide.

The foregoing descriptions are merely some examples of the present disclosure, and are not intended to limit the present disclosure in any form. Although the present disclosure has been disclosed as above by means of the preferred examples, these examples are not for limiting the present disclosure. Those skilled in the art can make certain alterations or modifications by using the technical contents disclosed above without departing from the scope of the technical solutions of the present disclosure, so as to arrive at equivalent examples, which fall within the scope of the technical solutions.

## Claims

1. A hybrid dialkylphosphinic acid salt, which is selected from the group consisting of compounds of formula (I) and combinations thereof; 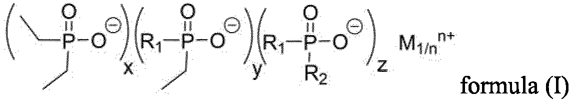
wherein M is a central atom; R₁ and R₂ are each independently selected from C₄-C₁₂-alkyl, and at least one of R₁ and R₂ is not isobutyl;
diethylphosphinate ion, ethyl-R₁-phosphinate ion and R₁-R₂-phosphinate ion are all ligands;
M is selected from metal elements, which are selected from the group consisting of group IIA, IIIA, IVA, VA metal elements, a transition metal element, a lanthanide metal element, and combinations thereof;
n is the valence state of the metal element M; n is 2, 3 or 4;
at least two among the ethyl-R₁-phosphinate ion, the diethylphosphinate ion, and the R₁-R₂-phosphinate ion are paired with the same central atom M; and one of the ligands paired with the central atom M is the ethyl-R₁-phosphinate ion;
0≤x≤0.76; 0.05≤y≤0.76; 0≤z≤0.76, and x+y+z=1.

2. The hybrid dialkylphosphinic acid salt according to claim 1, wherein the group IIA metal element is selected from the group consisting of Be, Mg, Ca, Sr, Ba and combinations thereof;
the group IIIA metal element is Al;
the group IV A metal element is Sn;
the group VA metal element is Sb;
the transition metal element is selected from the group consisting of Fe, Zn, Cu, Ti, Zr, Mn and combinations thereof;
the lanthanide metal element is Ce.

3. The hybrid dialkylphosphinic acid salt according to claim 1, wherein 0≤x≤0.76; 0.05≤y≤0.67; 0.005≤z≤0.76.

4. The hybrid dialkylphosphinic acid salt according to claim 1, wherein 0≤x≤0.70; 0.05≤y≤0.67; 0.005≤z≤0.70;
optionally, 0.1≤x≤0.65; 0.30≤y≤0.67; 0.01≤z≤0.50;
optionally, 0.30≤x≤0.65; 0.30≤y≤0.65; 0.02≤z≤0.40.

5. The hybrid dialkylphosphinic acid salt according to claim 1, wherein M=Al, n=3.

6. A preparation method for the hybrid dialkylphosphinic acid salt according to any one of claims 1 to 5, wherein the preparation method comprises:
carrying out reaction I on materials comprising a mixture A and a metal element M source in an aqueous phase to obtain the hybrid dialkylphosphinic acid salt, wherein
the mixture A comprises diethylphosphinic acid and/or an alkali metal salt of the diethylphosphinic acid, ethyl-R₁-phosphinic acid and/or an alkali metal salt of the ethyl-R₁-phosphinic acid, and R₁-R₂-phosphinic acid and/or an alkali metal salt of the R₁-R₂-phosphinic acid.

7. The preparation method according to claim 6, wherein the reaction I is carried out at 0-250°C, 0.1 MPa-10 MPa for 0.01-20 h.

8. The preparation method according to claim 6, wherein the reaction I is carried out at a pH of 0 to 4.

9. The preparation method according to claim 6, wherein obtaining of the mixture A comprises the following steps:
introducing ethylene and C₄-C₁₂-olefin into an aqueous solution containing phosphinic acid and/or an alkali metal salt of the phosphinic acid and a radical initiator for reaction II, thereby obtaining the mixture A.

10. The preparation method according to claim 9, wherein a molar ratio of the phosphinic acid and/or the alkali metal salt of the phosphinic acid to the ethylene to the C₄-C₁₂-olefin is 1:0.24-1.76:1.76-0.24.

11. The preparation method according to claim 9, wherein the mass of the water in the aqueous solution is 10%-99% of the total mass of the aqueous solution.

12. The preparation method according to claim 9, wherein the reaction II is carried out at 0-250°C, 0-3 MPa for 0.01-50 h.

13. The preparation method according to claim 9, wherein a molar ratio of the radical initiator to the phosphinic acid and/or the alkali metal salt thereof is 0.001-0.1:1;
optionally, the molar ratio of the radical initiator to the phosphinic acid and/or the alkali metal salt thereof is 0.003-0.05:1.

14. The preparation method according to claim 9, wherein obtaining of the mixture A comprises the following steps:
introducing C₄-C₁₂-olefin into an aqueous solution containing phosphinic acid and/or an alkali metal salt of the phosphinic acid and a radical initiator for reaction, after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing ethylene for reaction, thereby obtaining the mixture A.

15. The preparation method according to claim 9, wherein obtaining of the mixture A comprises the following steps:
introducing C₄-C₁₂-olefin and portion of ethylene into an aqueous solution containing phosphinic acid and/or an alkali metal salt of the phosphinic acid and a radical initiator for reaction, wherein a molar ratio of the ethylene to the total phosphorus of the phosphinic acid and/or the alkali metal salt of the phosphinic acid is less than (2x+y)/1 in formula (I), after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing the remaining ethylene for reaction, thereby obtaining the mixture A.

16. The preparation method according to claim 9, wherein obtaining of the mixture A comprises the following steps:
introducing portion of ethylene into an aqueous solution containing phosphinic acid and/or an alkali metal salt of the phosphinic acid and a radical initiator, wherein a molar ratio of the portion of ethylene to the total phosphorus of the phosphinic acid and/or the alkali metal salt of the phosphinic acid is less than or equal to (2x+y)/1 in formula (I); after the portion of ethylene completely reacts, introducing C₄-C₁₂-olefin for reaction; and after a molar ratio of the introduced C₄-C₁₂-olefin to the total phosphorus of the phosphinic acid and/or the alkali metal salt of the phosphinic acid reaches (y+2z)/1 in formula (I), stopping introducing the C₄-C₁₂-olefin, and then introducing the remaining ethylene for reaction, thereby obtaining the mixture A.

17. The preparation method according to any one of claims 9 to 16, wherein a molar ratio of the total amount of the ethylene to the total amount of the C₄-C₁₂-olefin is 0.14-7.33:1.

18. The preparation method according to claim 6, wherein the metal element M source is selected from the group consisting of metal element M salts and combinations thereof;
optionally, the metal element M salt is selected from the group consisting of nitrates, sulfates, hydrochlorides, acetates and oxides of the metal element M, and combinations thereof.

19. A flame retardant, comprising the hybrid dialkylphosphinic acid salt according to any one of claims 1 to 5 and/or a hybrid dialkylphosphinic acid salt prepared by the method according to any one of claims 6 to 18.

20. A flame-retardant material, comprising a flame retardant P and a thermoplastic polymer material, wherein
the flame retardant P is at least one of the flame retardants according to claim 19.

21. The flame-retardant material according to claim 20, wherein a mass percent of the flame retardant P in the flame-retardant material is 1%-35%.

22. The flame-retardant material according to claim 20, further comprising a functional additive, wherein
the functional additive is selected from the group consisting of a reinforcing agent, an anti-dripping agent, a stabilizer, a pigment, a dye, a charring catalyst, a dispersant, a nucleating agent, an inorganic filler, an antioxidant and combinations thereof;
Optionally, a mass percent of the functional additive in the flame-retardant material is 5%-40%.

23. The flame-retardant material according to claim 22, further comprising a flame retardant Q, wherein
the flame retardant Q is a nitrogen-based flame retardant and/or a boron-based flame retardant.

24. The flame-retardant material according to claim 23, wherein a mass percent of the flame retardant Q in the flame-retardant material is 0.5%-20%.

25. The flame-retardant material according to claim 20, wherein the thermoplastic polymer material is a polyamide and/or a polyester.
